# EUROPEAN PATENT APPLICATION

(11) **EP 4 631 892 A1**
(43) Date of publication of application: **15.10.2025**
(21) Application number: 23917712.4
(22) Date of filing: 15.12.2023
(51) Int. Cl.: B65G 1/137, B65G 1/00

(54) **ARTICLE TRANSPORT FACILITY**

(30) Priority: 19.01.2023 JP 2023006717
(71) Applicant: Daifuku Co., Ltd., Osaka-shi, Osaka 555-0012 (JP)
(72) Inventor: YOSHINAGA Kazuharu, Gamo-gun, Shiga 529-1692 (JP); TAKAGI Daiki, Gamo-gun, Shiga 529-1692 (JP)
(74) Representative: Grosse Schumacher Knauer von Hirschhausen
(86) International application number: PCT/JP2023/045013
(87) International publication number: WO 2024/154501

(57) **Abstract**

An article transport facility (100) includes an article supply section (2) that supplies articles to a transport vehicle and an article receiving section (3) that receives articles transported by the transport vehicle. A first lifter (L1) and a second lifter (L2) are each connected by an inter-lifter route (Rb) provided on each of a first travel floor (F1) and a second travel floor (F2). The article receiving section (3) is adjacent to the inter-lifter route (Rb) on each of the first travel floor (F1) and the second travel floor (F2). The article supply section (2) is disposed on at least either the first travel floor (F1) or the second travel floor (F2).

## Description

### Technical Field

The present invention relates to an article transport facility including a transport vehicle that transports articles and a plurality of travel floors each having a travel surface on which the transport vehicle travels.

### Background Art

Such an article transport facility is often used in logistics systems. JP 2016-113291A (Patent Document 1), for example, discloses a sorting device for sorting articles in a logistics system. Reference numerals shown below in parentheses in the description of the background art relate to Patent Document 1.

The sorting device (10) described in Patent Document 1 includes an upper area (A) and a lower area (B). The upper area (A) has a travel route (4) that extends in a planar manner, a transport vehicle (12) that automatically travels along the travel route (4), an article supply section (6), and a plurality of openings (8a). In the upper area (A), the transport vehicle (12) transports articles supplied by the article supply section (6) and drops the articles at a designated opening (8a). The articles dropped at the opening (8a) are housed and sorted in a shipping container (20) disposed in the lower area (B).

### Prior Art Documents

### Patent Documents

Patent Document 1: JP 2016-113291A

### Disclosure of the Invention

### Problem to be Solved by the Invention

Logistics systems have recently been under pressure to increase the number of articles they can handle per unit of time. One response to this demand is to increase the number of sections for receiving articles transported by the transport vehicles ("openings 8a" in the invention of Patent Document 1). However, with the invention described in Patent Document 1, increasing the number of openings (8a) serving as sections for receiving articles transported by the transport vehicles (12) requires that the upper area (A) and the lower area (B) be enlarged in a planar manner to secure space for the increased openings (8a).

In view of the above situation, it is desirable to realize a technology capable of increasing the number of sections for receiving articles transported by transport vehicles while suppressing a planer increase in size of the article transport facility.

### Means for Solving Problem

An article transport facility includes:
a transport vehicle configured to transport an article;
a plurality of travel floors each having a travel surface on which the transport vehicle travels;
a first lifter and a second lifter horizontally spaced away from each other and configured to raise and lower the transport vehicle between a first travel floor, which is the travel floor on a first level, and a second travel floor, which is the travel floor on a second level;
an article supply section configured to supply the article to the transport vehicle; and
an article receiving section configured to receive the article transported by the transport vehicle,
the first lifter and the second lifter being connected by an inter-lifter route provided on each of the first travel floor and the second travel floor,
the article receiving section being adjacent to the inter-lifter route on each of the first travel floor and the second travel floor, and
the article supply section being disposed on at least either the first travel floor or the second travel floor.

According to this configuration, the article receiving section is provided on each of the first travel floor and the second travel floor. Thus, articles transported by the transport vehicle can be received on both the first travel floor and the second travel floor, which are on different levels. Accordingly, the number of sections for receiving articles transported by the transport vehicle can be increased, without enlarging the article transport facility in a planar manner.

Further features and advantages of the technology according to the present disclosure will become apparent from the following description of exemplary and non-limiting embodiments with reference to the drawings.

### Brief Description of the Drawings

FIG. 1 is a plan view showing first and second travel floors of an article transport facility.
FIG. 2 is a schematic plan view of the article transport facility.
FIG. 3 is a schematic side view of the article transport facility.
FIG. 4 is a side view showing the vicinity of a sorting area.
FIG. 5 is a plan view showing an example of an operating unit limiting mode.
FIG. 6 is a plan view showing an example of a reception limiting mode.
FIG. 7 is a plan view showing an article transport facility according to a second embodiment.
FIG. 8 is a side view showing the vicinity of a sorting area according to the second embodiment.
FIG. 9 is a plan view showing an article transport facility according to a third embodiment.
FIG. 10 is a schematic side view of the article transport facility according to the third embodiment.

### Best Mode for Carrying out the Invention

An article transport facility includes a transport vehicle that transports articles and a plurality of travel floors each having a travel surface on which the transport vehicle travels. Hereinafter, embodiments of the article transport facility will be described with reference to the drawings.

### First Embodiment

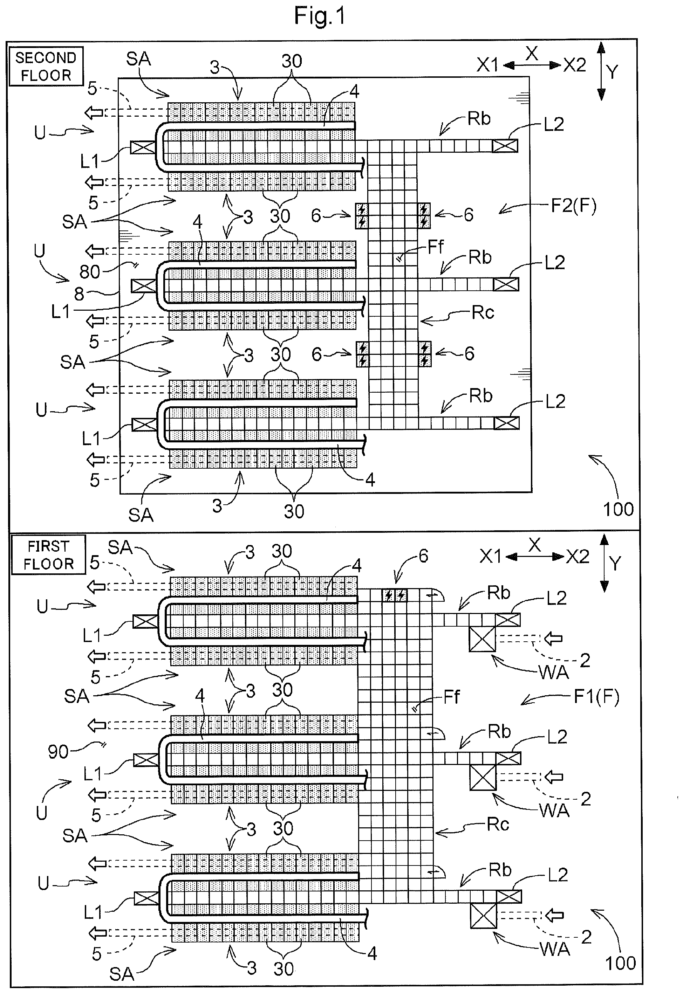

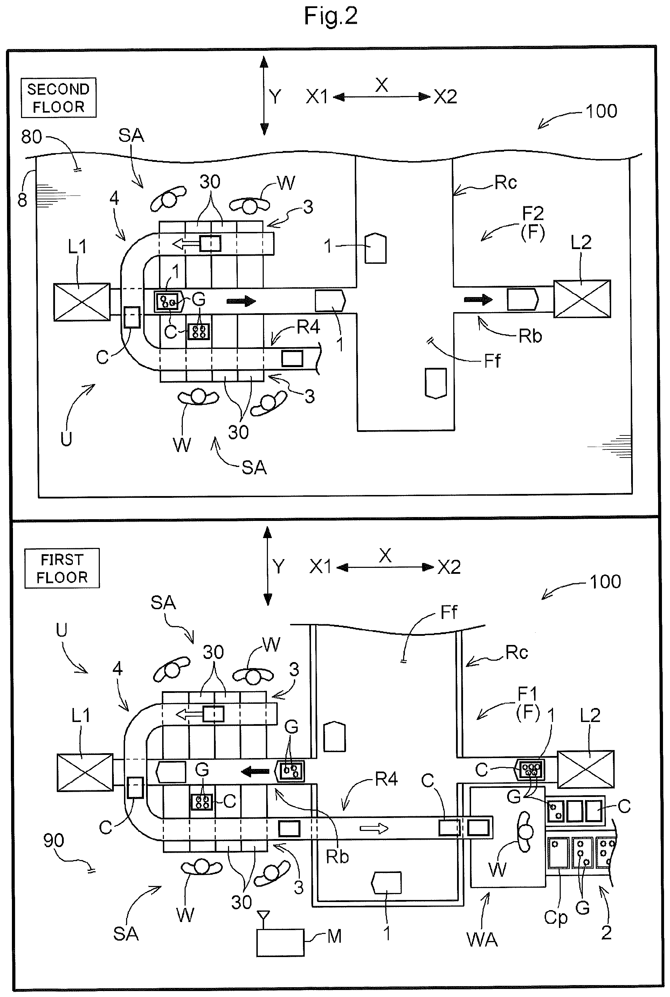

As shown in FIG. 1, an article transport facility 100 includes a first lifter L1 and a second lifter L2 that are horizontally spaced away from each other, and raise and lower transport vehicles 1 (see FIG. 2) between a first travel floor F1, which is the travel floor F on a first level, and a second travel floor F2, which is the travel floor F on a second level. In the example shown in FIG. 1, "first floor" corresponds to the first level, and "second floor" corresponds to the second level.

In the present embodiment, the first and second levels are adjacent to each other in the up-down direction. The second level is disposed above the first level.

The article transport facility 100 includes an article supply section 2 that supplies articles G (see FIG. 2) to the transport vehicles 1, and an article receiving section 3 that receives articles G transported by the transport vehicles 1. In the present embodiment, the article transport facility 100 is provided with a work area WA in which articles G supplied by the article supply section 2 are delivered to the transport vehicles 1. The article supply section 2 is adjacent to the work area WA. Also, the article transport facility 100 is provided with a sorting area SA in which articles G received by the article receiving section 3 are sorted. The article receiving section 3 is adjacent to the sorting area SA.

In the present embodiment, the work area WA is disposed only on the first level. The sorting area SA is provided on each of the first and second levels. That is, in the present example, the article supply section 2 is provided only on the first level, and the article receiving section 3 is provided on each of the first and second levels.

On each of the first and second travel floors F1 and F2 is provided an inter-lifter route Rb connecting the first lifter L1 and the second lifter L2. The transport vehicles 1 are able to move between the first lifter L1 and the second lifter L2 by traveling along the inter-lifter route Rb.

Hereinafter, the direction in which the inter-lifter route Rb extends will be referred to as "route length direction X", and the direction orthogonal to the route length direction X as viewed in the up-down direction will be referred to as "route width direction Y". Also, one side of the route length direction X will be referred to as "first side X1 in the route length direction", and the other side will be referred to as "second side X2 in the route length direction".

In the present embodiment, the first lifter L1 is disposed at the end of the inter-lifter route Rb on the first side X1 in the route length direction. The second lifter L2 is disposed at the end of the inter-lifter route Rb on the second side X2 in the route length direction.

In the present embodiment, the first lifter L1, the second lifter L2, the inter-lifter route Rb of the first travel floor F1, and the inter-lifter route Rb of the second travel floor F2 constitute a transport unit U. That is, the first lifter L1 and the second lifter L2 and the inter-lifter routes Rb connecting these lifters (L1, L2) on the travel floors F constitute the transport unit U.

In the present embodiment, there are a plurality of transport units U arranged in the route width direction Y. In the example shown in FIG. 1, three transport units U are arranged in the route width direction Y. There may, however, be two transport units U or four or more transport units U.

On at least either the first travel floor F1 or the second travel floor F2 is provided a connecting route Rc that connects the inter-lifter routes Rb of the transport units U in the route width direction Y. In the present embodiment, the connecting route Rc is provided on both the first and second travel floors F1 and F2. The inter-lifter routes Rb are connected by the connecting route Rc on both the first and second travel floors F1 and F2. The transport vehicles 1 are able to travel back and forth between the inter-lifter routes Rb via the connecting route Rc.

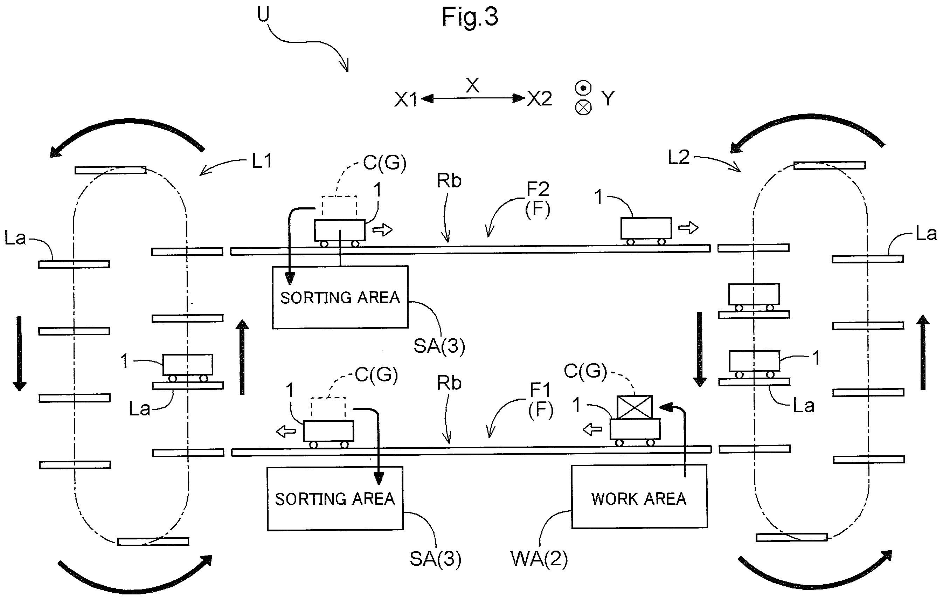

Next, a schematic configuration of the article transport facility 100 will be described, mainly with reference to FIGS. 2 and 3. FIGS. 2 and 3 show one transport unit U. Note that FIGS. 2 and 3 are diagrams for concisely describing the schematic configuration of the article transport facility 100. Accordingly, in FIGS. 2 and 3, elements that are not necessary for describing the schematic configuration of the article transport facility 100 are omitted, and elements necessary for description are only illustrated in a simplified manner.

As shown in FIG. 2, the article transport facility 100 includes the first travel floor F1 on the first level, the second travel floor F2 on the second level, and the transport vehicles 1 that travel on a travel surface Ff of each of the first and second travel floors F1 and F2. The transport vehicles 1 travel on the travel surface Ff of the travel floor F on each level.

The article transport facility 100 includes a floor surface 90 and a frame 8. The floor surface 90 is below the first travel floor F1. Workers W can stand on the floor surface 90 and work, carry out maintenance, and the like on the first travel floor F1. The frame 8 includes a scaffold 80 for the workers W. The scaffold 80 is above the first travel floor F1 and below the second travel floor F2. The workers W can stand on the scaffold 80 of the frame 8 and work, carry out maintenance, and the like on the second travel floor F2.

In the present embodiment, the scaffold 80 of the frame 8 extends across the entirety of the transport unit U as viewed in the up-down direction. In the example shown in FIG. 1, the scaffold 80 of the frame 8 extends across the entirety of the plurality of transport units U as viewed in the up-down direction. In other words, one frame 8 is provided for the plurality of transport units U.

In the present embodiment, the article transport facility 100 is provided with a controller M that performs overall control of transportation of articles G in the facility. The controller M controls a plurality of transport vehicles 1. The controller M issues commands such as a transport command and a standby command to the transport vehicles 1. The transport command designates the transport source and destination of articles G. The transport vehicles 1, having received the transport command, receive articles G at the designated transport source and transport the articles G to the designated transport destination. The standby command designates a standby location. The transport vehicles 1, having received the standby command, travel to the designated standby location and wait for the next command or the like.

The transport vehicles 1 travel in an automated manner. In the present embodiment, the transport vehicles 1 are each equipped with a battery and operate using power stored in the battery as a drive source. The article transport facility 100 is provided with a charging station 6 (see FIG. 1). The transport vehicles 1 can be charged at the charging station 6 in response to the storage amount of the battery decreasing.

Although not illustrated in detail, in the present embodiment, at various locations on the travel floors F are provided position information holding sections that hold position information. The position information holding sections each include address information indicating the position of the position information holding section. The transport vehicles 1 each include a detection section (not shown) for detecting position information holding sections, and, by detecting the position information holding sections with this detection section, are able to grasp their own current position at the time of detection. The transport vehicles 1 sequentially read the position information holding sections while traveling toward the target location. For example, one-dimensional or two-dimensional codes that hold identification information can be used as the position information holding sections. Alternatively, RFID tags (Radio Frequency Identification Tags) that hold identification information can be used as the position information holding sections.

As described above, the article transport facility 100 includes the article supply section 2 that supplies articles G to the transport vehicles 1 and the article receiving section 3 that receives articles G transported by the transport vehicles 1. Also, the work area WA is adjacent to the article supply section 2. In the work area WA, articles G supplied by the article supply section 2 are delivered to the transport vehicles 1. The sorting area SA is adjacent to the article receiving section 3. In the sorting area SA, articles G received by the article receiving section 3 are sorted.

The article supply section 2 is disposed on at least either the first travel floor F1 or the second travel floor F2. In the present embodiment, the article supply section 2 is disposed only on the first travel floor F1. In other words, the work area WA is disposed only on the first travel floor F1. On each of the first and second travel floors F1 and F2, the article receiving section 3 is adjacent to the inter-lifter route Rb. That is, in the present embodiment, the number of travel floors F (first and second travel floors F1 and F2) on which the article receiving section 3 is disposed is greater than the number of travel floors F (first travel floor F1) on which the article supply section 2 is disposed.

The work area WA is adjacent to each of the inter-lifter routes Rb on the first travel floor F1. That is, the same number of work areas WA as the number of inter-lifter routes Rb (three inter-lifter routes Rb in the example shown in FIG. 1) on the first travel floor F1 are provided.

The articles G from the article supply section 2 are supplied to the transport vehicles 1 either directly or housed in containers C. In the present embodiment, the article supply section 2 supplies the articles G to the work area WA with the articles G housed in supply containers Cp. In the work area WA, the articles G housed in the supply containers Cp are unloaded and delivered to the transport vehicles 1 waiting on the inter-lifter route Rb. That is, in the present embodiment, delivery of articles G to the transport vehicles 1 may be performed with the articles G housed in the containers C which are separate from the supply containers Cp, or the articles G may be delivered directly without being housed in the containers C. The articles G are supplied from the article supply section 2 to the transport vehicles 1 by being delivered in this manner. In the present embodiment, the work in the work area WA is carried out by workers W. The work may, however, be performed by robots instead of workers W, or by both workers W and robots.

The transport vehicles 1 transport the articles G or the containers C housing the articles G. The transport vehicles 1 transport the articles G supplied by the article supply section 2, that is, in the present example, the articles G or the containers C housing the articles G received in the work area WA, to the article receiving section 3.

The article receiving section 3 is adjacent to the inter-lifter route Rb in the route width direction Y and is spaced away from the work area WA. In the present example, the article receiving section 3 is provided on each side of the inter-lifter route Rb in the route width direction Y.

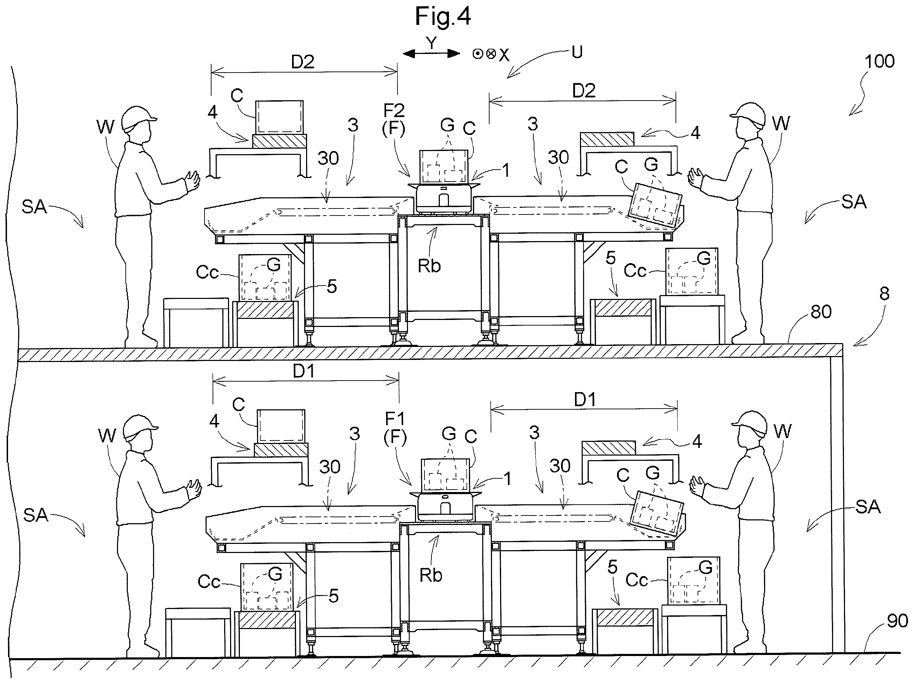

In the present embodiment, the article receiving section 3 includes a plurality of transport mechanisms 30 arranged in the route length direction X. The transport mechanisms 30 each transport articles G or containers C housing articles G received from the transport vehicles 1 in the route width direction Y. In the present example, the transport mechanisms 30 are each constituted using a conveyor (see also FIG. 4). The transport mechanisms 30 may, however, be constituted using a chute that slopes downward toward the outer side in the route width direction Y, for example. When chutes are used as the transport mechanisms 30, the articles G or the containers C housing the articles G are transported toward the outer side in the route width direction Y under their own weight.

As described above, the sorting area SA is adjacent to the article receiving section 3. The articles G or the containers C housing the articles G transported to the outer side in the route width direction Y by the transport mechanisms 30 of the article receiving section 3 are transported to the sorting area SA. That is, the transport vehicles 1 transport the articles G or the containers C housing the articles G received in the article supply section 2 to the sorting area SA. In the present example, the transport vehicles 1 transport the articles G or the containers C housing the articles G received in the article supply section 2 to the sorting area SA, via the transport mechanisms 30 of the article receiving section 3.

In the sorting area SA, the articles G transported by the transport vehicles 1 are sorted. Sorting is performed based on predetermined order information. For example, the order information includes various information such as customer information, shipping destination information, and product type information.

In the present embodiment, when the transport vehicles 1 transport the articles G housed in the containers C to the sorting area SA, the articles G are unloaded from the containers C in the sorting area SA. That is, sorting includes the unloading of articles G from the containers C transported by the transport vehicles 1. In the present embodiment, the sorting (including unloading) of articles G in the sorting area SA is carried out by workers W. The sorting may, however, be performed by robots instead of workers W, or by both workers W and robots.

As shown in FIG. 4, in the present embodiment, the sorting area SA is provided with a collection container Cc for housing one or more articles G collected by order information in the sorting, and a discharge conveyor 5 (see also FIG. 1) that discharges the collection container Cc from the sorting area SA. The collection container Cc housing the articles G is discharged out of the sorting area SA by the discharge conveyor 5, and transported to where the next process is performed, for example.

The articles G are separated from the containers C by the above-described unloading performed in the sorting area SA, resulting in empty containers C. As shown in FIG. 2, in the present embodiment, on the travel floors F (in the present example, first and second travel floors F1 and F2) having the article receiving section 3 is provided an empty container collector 4 that collects the empty containers C arising from the unloading of articles G in the sorting area SA. In the present example as described above, the article receiving section 3 is disposed on both the first and second travel floors F1 and F2. Accordingly, the empty container collector 4 is provided on both the first and second travel floors F1 and F2. In the present embodiment, the empty container collector 4 provided on the first travel floor F1 is disposed above the travel surface Ff of the first travel floor F1, and the empty container collector 4 provided on the second travel floor F2 is disposed above the travel surface Ff of the second travel floor F2.

In the present embodiment, the empty container collector 4 transports the empty containers C along a collection route R4 that extends to a position adjacent to the work area WA. In the present example, the collection route R4 extends to inside the work area WA. The empty containers C collected by the empty container collector 4 are transported to the work area WA along the collection route R4 and reused in the work performed in the work area WA. The empty container collector 4 is constituted using a conveyor, for example. The empty container collector 4 constituted using a conveyor extends along the collection route R4.

After delivering the articles G to the sorting area SA (article receiving section 3) on the first travel floor F1, the transport vehicles 1 ride the second lifter L2 to the second travel floor F2. The transport vehicles 1 then travel on the second travel floor F2 and ride the first lifter L1 back to the first travel floor F1. After returning to the first travel floor F1, the transport vehicles 1 again receive articles G in the work area WA (article supply section 2) and transport the articles G to the sorting area SA (article receiving section 3) in the manner described above.

The transport vehicles 1 are also able to transport the articles G supplied in the work area WA (article supply section 2) of the first travel floor F1 to the sorting area SA (article receiving section 3) on the second travel floor F2, instead of the sorting area SA (article receiving section 3) on the first travel floor F1. In this case, the transport vehicles 1 ride the second lifter L2 while holding the articles G and, after getting off on the second travel floor F2, transport the articles G to the sorting area SA (article receiving section 3) on the second travel floor F2. Thereafter, the transport vehicles 1 travel on the second travel floor F2 and ride the first lifter L1 back to the first travel floor F1 in the manner described above.

FIG. 3 shows the transport vehicles 1 traveling back and forth between the levels of one transport unit U. As shown in FIG. 3, the inter-lifter route Rb of the first travel floor F1 and the inter-lifter route Rb of the second travel floor F2 are parallel to each other, and are set such that the directions in which the transport vehicles 1 are allowed to travel are opposite to each other in the route length direction X.

In the present embodiment, the transport vehicles 1 travel along the inter-lifter route Rb of the first travel floor F1 toward the first side X1 in the route length direction. Also, the transport vehicles 1 travel along the inter-lifter route Rb of the second travel floor F2 toward the second side X2 in the route length direction.

The first lifter L1 connects the end of the inter-lifter route Rb of the first travel floor F1 on first side X1 in the route length direction to the end of the inter-lifter route Rb of the second travel floor F2 on the first side X1 in the route length direction. The first lifter L1 raises and lowers the transport vehicles 1 between the end of the inter-lifter route Rb of the first travel floor F1 on the first side X1 in the route length direction and the end of the inter-lifter route Rb of the second travel floor F2 on the first side X1 in the route length direction.

The second lifter L2 connects the end of the inter-lifter route Rb of the first travel floor F1 on the second side X2 in the route length direction to the end of the inter-lifter route Rb of the second travel floor F2 on the second side X2 in the route length direction. The second lifter L2 raises and lowers the transport vehicles 1 between the end of the inter-lifter route Rb of the first travel floor F1 on the second side X2 in the route length direction and the end of the inter-lifter route Rb of the second travel floor F2 on the second side X2 in the route length direction.

The first lifter L1 and the second lifter L2 each include a lifting platform La on which the transport vehicles 1 can be placed. The first lifter L1 and the second lifter L2 each raise and lower the transport vehicles 1 between the plurality of levels with the transport vehicles 1 placed on the lifting platform La thereof. The first lifter L1 and the second lifter L2 each raise and lower the lifting platform La with the lifting platform La maintained in a horizontal plane (e.g., parallel to a horizontal plane).

In the present embodiment, the first and second lifters L1 and L2 each include a plurality of lifting platforms La. The first and second lifters L1 and L2 each circulate the lifting platforms La along a predetermined annular route.

In the present embodiment, the first lifter L1 raises the transport vehicles 1. That is, the first lifter L1 is a lifter for moving the transport vehicles 1 from the first travel floor F1 to the second travel floor F2.

In the present embodiment, the second lifter L2 lowers the transport vehicles 1. That is, the second lifter L2 is a lifter for moving the transport vehicles 1 from the second travel floor F2 to the first travel floor F1.

As described above, in the present embodiment, the first travel floor F1 includes the work area WA (article supply section 2) in which the transport vehicles 1 receives articles G, and the sorting area SA (article receiving section 3) in which the transport vehicles 1 delivers the articles G. In the present example, the transport vehicles 1 exit onto the first travel floor F1 from the exit point of the second lifter L2 for use in lowering the transport vehicles 1 and receive articles G in the work area WA. Thereafter, the transport vehicles 1 travel along the inter-lifter route Rb of the first travel floor F1 toward the first side X1 in the route length direction while holding the articles G, and deliver the articles G in the sorting area SA. The transport vehicles 1 then enter the first lifter L1 for use in raising the transport vehicles 1 from the first travel floor F1 and proceed to the second travel floor F2. The transport vehicles 1 exit onto the second travel floor F2 from the exit point of the first lifter L1 for use in raising the transport vehicles 1 and travel along the inter-lifter route Rb of the second travel floor F2 toward the second side X2 in the route length direction. The transport vehicles 1 then enter the second lifter L2 for use in lowering the transport vehicles 1 and proceed to the first travel floor F1. In this way, the transport vehicles 1 circulate through the first and second travel floors F1 and F2. Note that the sorting area SA (article receiving section 3) is also provided on the second travel floor F2. Thus, after receiving articles G in the work area WA (article supply section 2) of the first travel floor F1, the transport vehicles 1 may deliver the articles G in the sorting area SA (article receiving section 3) on the second travel floor F2, instead of the sorting area SA (article receiving section 3) on the first travel floor F1.

In the article transport facility 100 according to the present disclosure, the sorting area SA (article receiving section 3) is provided not only on the first travel floor F1 but also on the second travel floor F2. Thus, the articles G transported by the transport vehicles 1 can be received on both the first and second travel floors F1 and F2, which are on different levels from each other. Accordingly, the number of sections (article receiving sections 3) for receiving articles G transported by the transport vehicles 1 can be increased, without enlarging the article transport facility 100 in a planar manner.

As shown in FIG. 4, the article transport facility 100 includes the floor surface 90 that workers W who work on the first travel floor F1 are able to stand on, and the frame 8 that workers W who work on the second travel floor F2 are able to stand on. In the present example, the scaffold 80 of the frame 8 is above the first travel floor F1. Workers W are able to work on the second travel floor F2 by standing on the scaffold 80.

In the present embodiment, the article receiving section 3 on the first travel floor F1 and the article receiving section 3 on the second travel floor F2 overlap as viewed in the up-down direction. Also, where the distance in the route width direction Y between the inter-lifter route Rb of the first travel floor F1 and the sorting area SA of the first level is given a distance D1 (hereinafter referred to as "first distance D1"), and the distance in the route width direction Y between the inter-lifter route Rb of the second travel floor F2 and the sorting area SA of the second level is given a distance D2 (hereinafter referred to as "second distance D2"), the first distance D1 and the second distance D2 are equivalent distances in the present example. In other words, the disposition area of the article receiving section 3 in the route width direction Y on the first travel floor F1 and the disposition area of the article receiving section 3 in the route width direction Y on the second travel floor F2 are equivalent areas. To put it another way, the distances that the transport mechanisms 30 transport the articles G in the route width direction Y are equivalent between the first and second travel floors F1 and F2. The sorting area SA of the first level and the sorting area SA of the second level thereby overlap as viewed in the up-down direction.

In the present embodiment, the two sorting areas SA disposed one on either side of the inter-lifter route Rb in the route width direction Y on the first travel floor F1 are spaced equivalent distances away from the inter-lifter route Rb in the route width direction Y. That is, one sorting area SA disposed on one side of the inter-lifter route Rb in the route width direction Y is spaced the first distance D1 away from the inter-lifter route Rb. The other sorting area SA disposed on the other side of the inter-lifter route Rb in the route width direction Y is also spaced the first distance D1 away from the inter-lifter route Rb.

Also, in the present embodiment, the two sorting areas SA disposed one on either side of the inter-lifter route Rb in the route width direction Y on the second travel floor F2 are spaced away from the inter-lifter route Rb by equivalent distances to each other in the route width direction Y. That is, one sorting area SA disposed on one side of the inter-lifter route Rb in the route width direction Y is spaced the second distance D2 away from the inter-lifter route Rb. The other sorting area SA disposed on the other side of the inter-lifter route Rb in the route width direction Y is also spaced the second distance D2 away from the inter-lifter route Rb.

Here, in the article transport facility 100, the total number of articles G to be transported may vary according to customer needs and the like. In this case, the transport load in the article transport facility 100 varies. In the article transport facility 100 according to the present embodiment, the controller M (see FIG. 2) is capable of executing a plurality of modes that depend on the transport load. It is thereby possible to respond flexibly to variation in the transport load in the article transport facility 100.

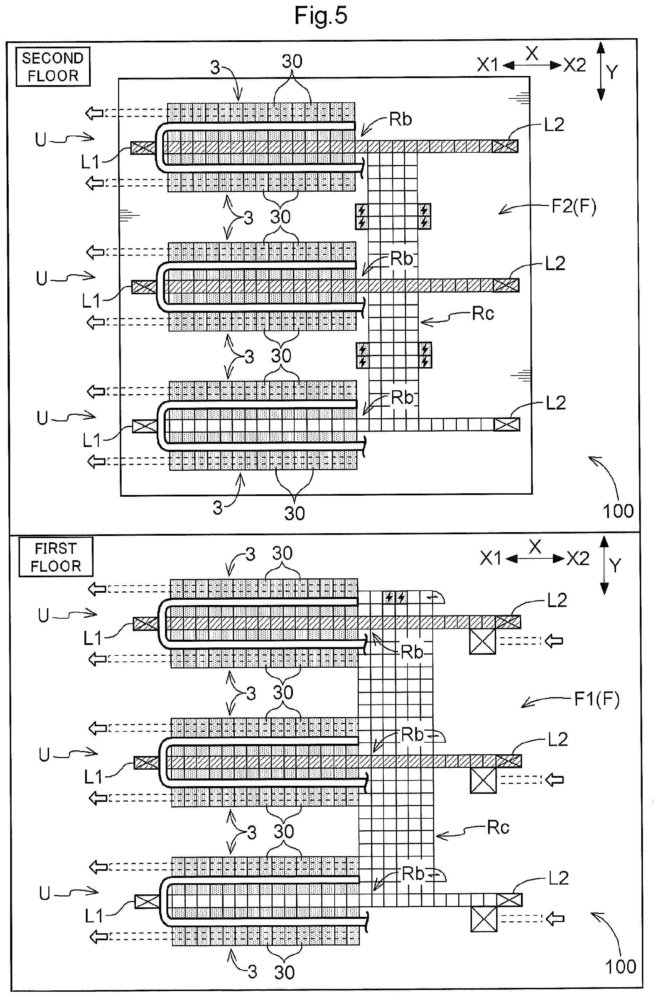

As shown in FIG. 5, in the present embodiment, the controller M is capable of executing an operating unit limiting mode in which the transport units U to be operated are limited to one or more of the plurality of transport units U. In the operating unit limiting mode, one or more of the transport units U are set to be non-operational and the remainder are set to be operational. In FIG. 5, the hatched transport units U (top and middle transport units U in FIG. 5) are non-operational due to the operating unit limiting mode.

As described above, one transport unit U includes the first lifter L1, the second lifter L2, the inter-lifter route Rb of the first travel floor F1, and the inter-lifter route Rb of the second travel floor F2 as constituent elements. In the operating unit limiting mode according to the present embodiment, among the constituent elements of the transport units U that are set to be non-operational, operation of the first and second lifters L1 and L2 is stopped, and the travel vehicles 1 are prohibited from traveling on the inter-lifter routes Rb of the first and second floors F1 and F2.

By executing the operating unit limiting mode, the number of transport units U operating in the article transport facility 100 can be suppressed in off-peak periods or the like when the transport load is low due to a reduced number of articles G to be transported. Accordingly, energy consumption in the article transport facility 100 can be suppressed.

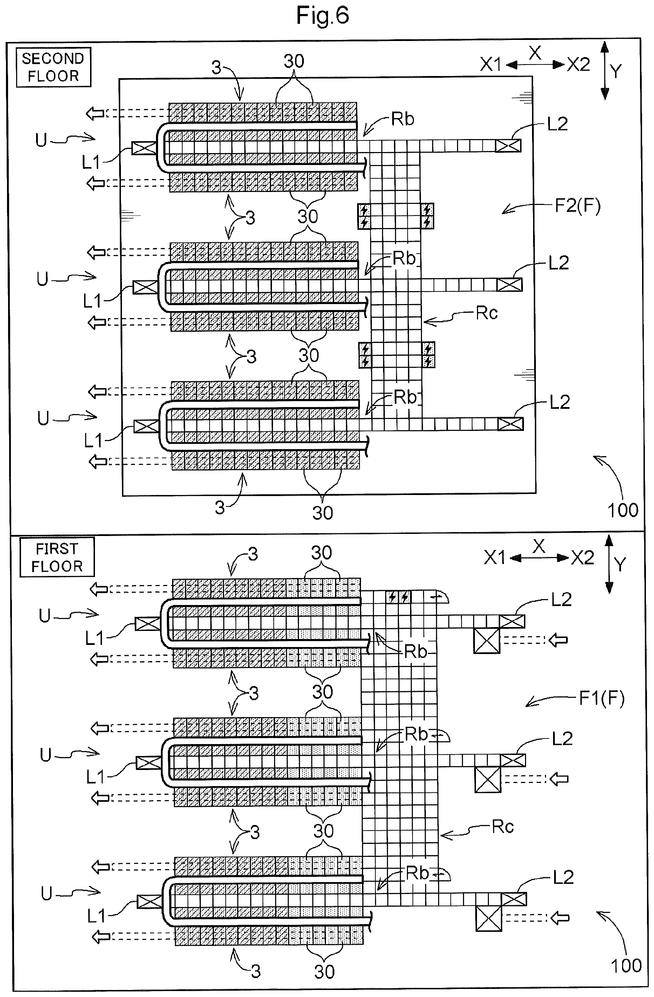

As shown in FIG. 6, in the present embodiment, the controller M is capable of executing a reception limiting mode for limiting the number of articles G to be received by the article receiving sections 3. In the reception limiting mode, the article receiving sections 3 are set to be partially non-operational, and the remaining portion thereof is set to be operational. In the reception limiting mode according to the present embodiment, the article receiving sections 3 are set to be partially non-operational while securing a large number of transport units U to be operated. In FIG. 6, the hatched portions of the article receiving sections 3 are portions that are non-operational due to the reception limiting mode.

As described above, the article receiving sections 3 each include a plurality of transport mechanisms 30 arranged in the route length direction X. The transport mechanisms 30 each transport articles G or containers C housing the articles G received from the transport vehicles 1 in the route width direction Y. In the reception limiting mode according to the present embodiment, one or more of the plurality of transport mechanisms 30 are set to be non-operational. The controller M designates the remaining transport mechanisms 30 that are operating as transport destinations of the articles G with respect to the transport vehicles 1.

By executing the reception limiting mode, in off-peak periods or the like when the transport load is low due to a reduced number of articles G to be transported, the articles G can be sorted in a short period of time while suppressing energy consumption in the article transport facility 100. That is, in the reception limiting mode, the article receiving sections 3 are set to be partially non-operational, but since the number of transport units U that are operated is large, a large number of operating transport units U can be secured relative to the total number of articles G to be transported. The transport vehicles 1 are thus able to utilize any of the operating transport units U to transport the articles G. Accordingly, the travel destinations of the transport vehicles 1 can be distributed among the plurality of transport units U, and congestion of the transport vehicles 1 at any one transport unit U can be suppressed.

### Second Embodiment

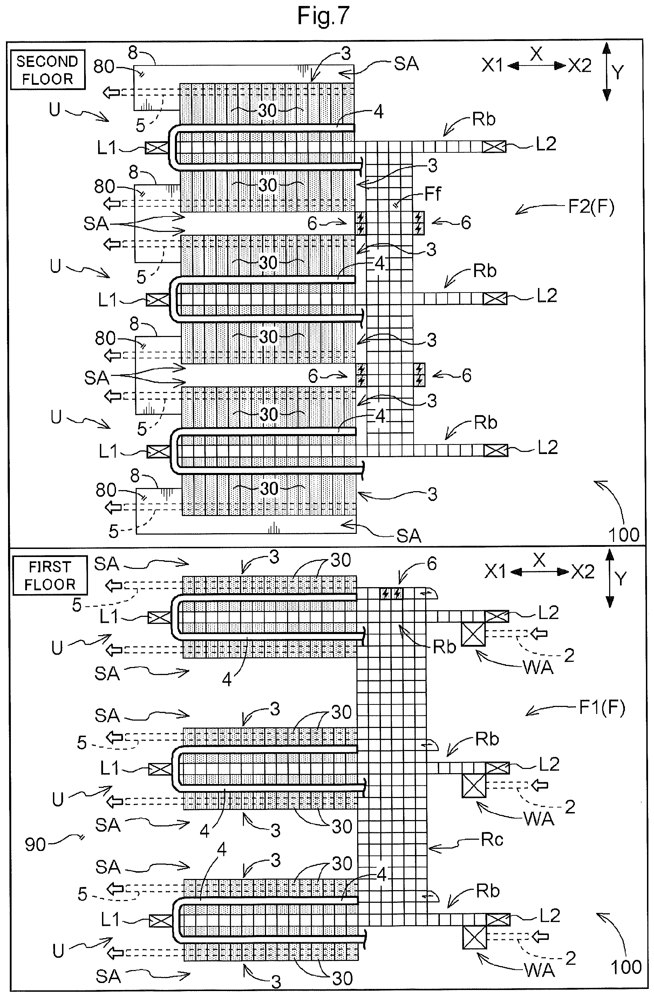

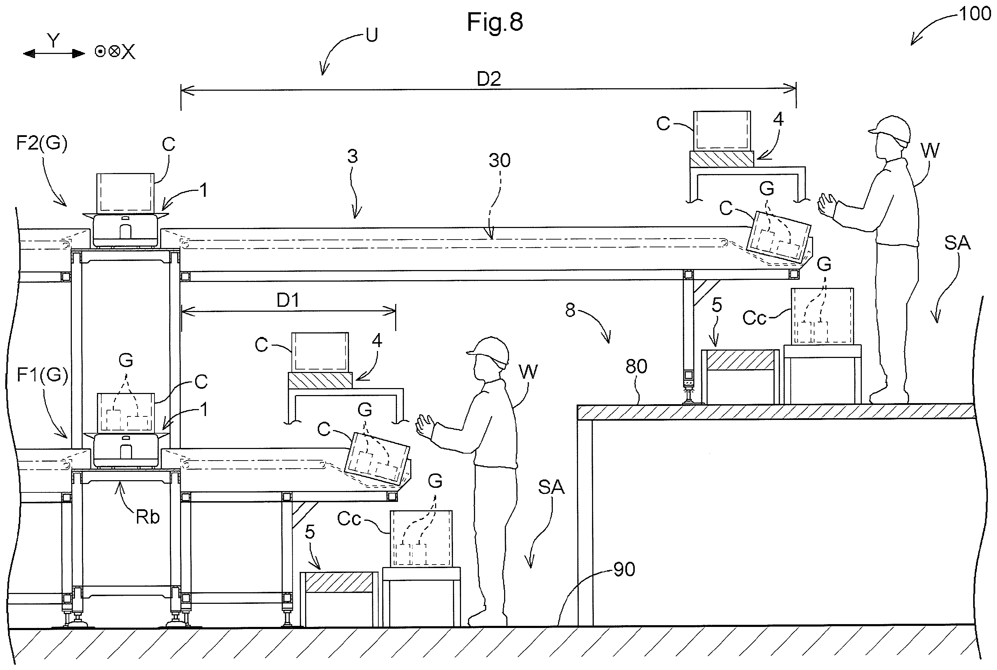

Next, a second embodiment of the article transport facility 100 will be described with reference to FIGS. 7 and 8. The second embodiment mainly differs from the first embodiment in terms of the configuration of the article receiving section 3 and the frame 8. The following description of the second embodiment focuses on the differences from the first embodiment. Similar points to the first embodiment will not be specifically described below.

As shown in FIG. 7, in the present embodiment, the article transport facility 100 includes a plurality of frames 8. The frames 8 respectively correspond to the article receiving sections 3 on the second travel floor F2.

The scaffold 80 of the frame 8 extends across part of the corresponding article receiving section 3 and the sorting area SA adjacent to that article receiving section 3 as viewed in the up-down direction. The scaffold 80 of each frame 8 does not overlap with the inter-lifter route Rb of the first and second travel floors F1 and F2 as viewed in the up-down direction.

In the present embodiment, one frame 8 is shared by two transport units U adjacent to each other. More specifically, on the second travel floor F2, the article receiving section 3 of one transport unit U and the article receiving section 3 of another transport unit U adjacent to the one transport unit U are adjacent in the route width direction Y. One frame 8 is provided for these two article receiving sections 3. That is, the scaffold 80 of one frame 8 extends across these two article receiving sections 3.

FIG. 8 shows one transport unit U. As shown in FIG. 8, in the present embodiment, the distance (first distance D1) in the route width direction Y between the inter-lifter route Rb of the first travel floor F1 and the sorting area SA of the first level differs from the distance (second distance D2) in the route width direction Y between the inter-lifter route Rb of the second travel floor F2 and the sorting area SA of the second level. In other words, the disposition areas of the article receiving sections 3 in the route width direction Y on the first travel floor F1 differ from the disposition areas of the article receiving sections 3 in the route width direction Y on the second travel floor F2. To put it another way, the distances that the transport mechanisms 30 transport the articles G in the route width direction Y differ between the first travel floor F1 and the second travel floor F2.

In the present embodiment, the second distance D2 is longer than the first distance D1. In the same transport unit U, the sorting area SA of the second level is thus disposed on the other side of the sorting area SA of the first level in the route width direction Y. The sorting area SA of the first level and the sorting area SA of the second level can thereby be disposed to not overlap with each other as viewed in the up-down direction. Thus, the first and second levels are readily disposed close together, and the facility can be reduced in size as a whole in the up-down direction. In the example shown in FIG. 8, the first and second levels are disposed close together in such a manner that the height of the scaffold 80 is below the height of the workers W standing on the floor surface 90 (e.g., average height of workers W or the anticipated maximum height of workers W).

### Third Embodiment

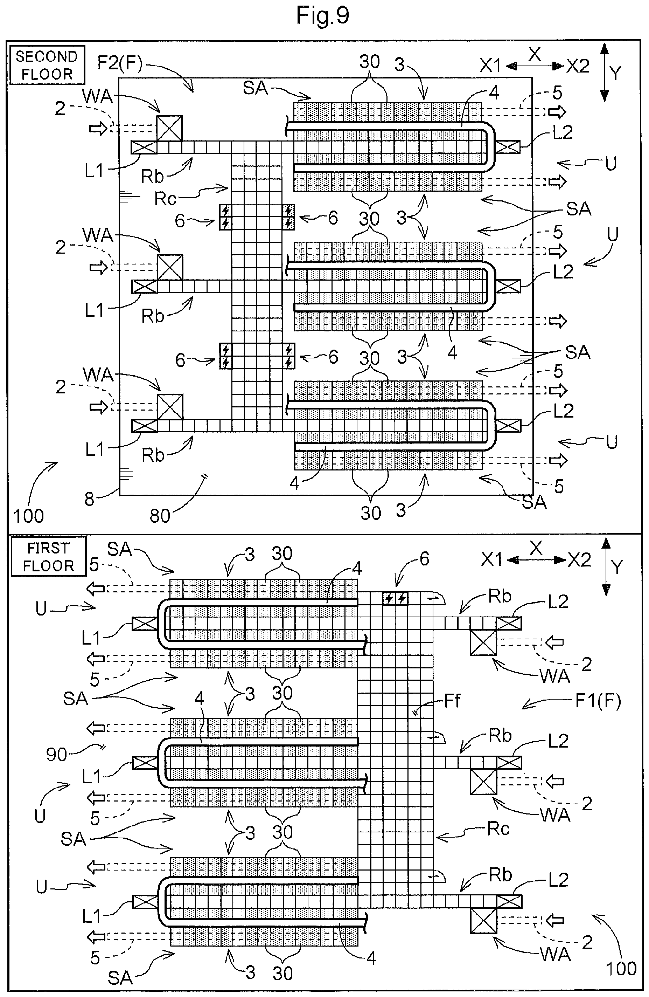

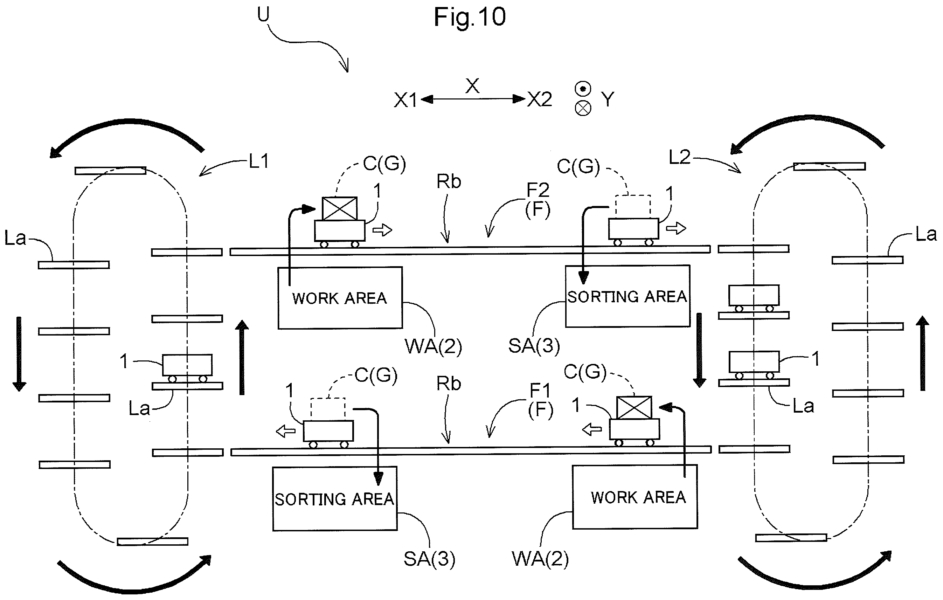

Next, a third embodiment of the article transport facility 100 will be described with reference to FIGS. 9 and 10. The third embodiment mainly differs from the first embodiment in terms of the configuration of the second travel floor F2. The following description of the third embodiment focuses on the differences from the first embodiment. Similar points to the first embodiment will not be specifically described below.

As shown in FIGS. 9 and 10, the article supply section 2 and the article receiving section 3 are disposed on a travel floor F on the same level. Specifically, the article supply section 2 (work area WA) and the article receiving section 3 (sorting area SA) are disposed on the first travel floor F1, and the article supply section 2 (work area WA) and the article receiving section 3 (sorting area SA) are disposed on the second travel floor F2.

In the present embodiment, on each of the first and second travel floors F1 and F2, the article supply section 2 (work area WA) is disposed upstream in the travel direction of the transport vehicles 1, and the article receiving section 3 (sorting area SA) is disposed downstream of the article supply section 2 in the travel direction of the transport vehicles 1. In the present example, on the first travel floor F1, the article supply section 2 (work area WA) is disposed on the second side X2 of the article receiving section 3 (sorting area SA) in the route length direction. On the other hand, on the second travel floor F2, the article supply section 2 (work area WA) is disposed on the first side X1 of the article receiving section 3 (sorting area SA) in the route length direction.

For example, in the present embodiment, on the first travel floor F1, the transport vehicles 1 transport articles G supplied by the article supply section 2 (work area WA) to the article receiving section 3 (sorting area SA). The transport vehicles 1 that have finished transporting the articles G and are not holding any articles G ride the first lifter L1 to the second travel floor F2. On the second travel floor F2, the transport vehicles 1 transport articles G supplied by the article supply section 2 (work area WA) to the article receiving section 3 (sorting area SA).

According to the present embodiment, the transport vehicles 1 are able to transport articles G supplied by the article supply section 2 to the article receiving section 3 disposed on the same level as the article supply section 2. Thus, the processes from supply to receipt of the articles G can be completed on one level. Accordingly, the distance that the transport vehicles 1 transport the articles G is readily kept short.

Given that the transport distance of the articles G by the transport vehicles 1 is readily kept short, the above configuration is suitable for transporting articles G that are desirably not subjected to vibration at the time of transportation, that is, articles G that are vulnerable to vibration. Articles G that are vulnerable to vibration include articles whose posture during transport tends to be unstable, such as articles that roll easily, for example. Also, depending on the configuration of the lifters, comparatively large vibration can occur during raising and lowering of the transport vehicles 1 by the lifters, but, in the present embodiment, the processes from supply to receipt of the articles G can be completed on one level without need for travel via the lifters. In this respect as well, the above configuration is suitable for transporting articles G that are vulnerable to vibration.

### Other Embodiments

Next, other embodiments of the article transport facility will be described.
(1) The above first and second embodiments describe examples in which the article receiving section 3 is disposed on a greater number of travel floors F than the article supply section 2. However, the present disclosure is not limited to such examples, and the article receiving section 3 may be disposed on the same number of travel floors F as the article supply section 2, as in the third embodiment. Alternatively, the article receiving section 3 may be disposed on a fewer number of travel floors F than the article supply section 2.
(2) The above embodiments describe examples in which the article receiving section 3 is provided on both sides of the inter-lifter route Rb in the route width direction Y. However, the present disclosure is not limited to such examples, and the article receiving section 3 may be provided only on one side of the inter-lifter route Rb in the route width direction Y.
(3) The above embodiments describe examples in which the two sorting areas SA disposed one on either side of the inter-lifter route Rb of the first travel floor F1 in the route width direction Y are spaced equivalent distances away from the inter-lifter route Rb in the route width direction Y. However, the present disclosure is not limited to such examples, and the distances that the first travel floor F1 is spaced away from the inter-lifter route Rb may differ between the sorting areas SA on one side and the other side. The inter-lifter route Rb and the two sorting areas SAs disposed on either side thereof on the second travel floor F2 may be in a similar relationship to that on the first travel floor F1.
(4) The above embodiments describe examples in which the empty container collector 4 that collects the empty containers C arising from the unloading of articles G in the sorting area SA is provided. However, the present disclosure is not limited to such examples, and the empty container collector 4 need not be provided. In this case, the transport vehicles 1, for example, may collect the empty containers C arising from the unloading of articles G in the sorting area SA.
(5) The above embodiments describe examples in which a plurality of transport units U are arranged in the route width direction Y. However, the present disclosure is not limited to such examples, and the article transport facility 100 may include a single transport unit U.
(6) The above embodiments describe examples in which the first lifter L1 and the second lifter L2 each circulate the lifting platforms La along a predetermined annular route. However, the present disclosure is not limited to such examples, and at least either the first lifter L1 or the second lifter L2 may reciprocate the lifting platforms La along a single route extending in the up-down direction.
(7) The above embodiments describe examples in which the article transport facility 100 includes the first travel floor F1 on the first level and the second travel floor F2 on the second level. This means that the article transport facility 100 includes at least the first travel floor F1 and the second travel floor F2, and may also include travel floors F on other levels. These "other levels" may be between the first and second levels, or may be above or below the first and second levels. Also, different from the above embodiments, the second level may be below the first level.
(8) The above second embodiment describes an example in which the second distance D2 is longer than the first distance D1. However, the present disclosure is not limited to such an example, and the second distance D2 may be shorter than the first distance D1. In this case, in the same transport unit U, the sorting area SA of the second level is disposed on the inner side of the sorting area SA of the first level in the route width direction Y. The sorting area SA of the first level and the sorting area SA of the second level can also be disposed to not overlap with each other as viewed in the up-down direction in this case, as in the above second embodiment. Thus, the first and second levels are readily disposed close together, and the facility can be reduced in size as a whole in the up-down direction.
(9) Note that configurations described in the above embodiments can also be applied in combination with configurations disclosed in other embodiments as long as no inconsistencies arise. The embodiments disclosed herein are merely illustrative in all respects in relation also to other configurations. Accordingly, various modifications can be made as appropriate, within a range that does not depart from the gist of the present disclosure.

### Outline of the Embodiments

Hereinafter, the above article transport facility will be described.

An article transport facility includes:
a transport vehicle configured to transport an article;
a plurality of travel floors each having a travel surface on which the transport vehicle travels;
a first lifter and a second lifter horizontally spaced away from each other and configured to raise and lower the transport vehicle between a first travel floor, which is the travel floor on a first level, and a second travel floor, which is the travel floor on a second level;
an article supply section configured to supply the article to the transport vehicle; and
an article receiving section configured to receive the article transported by the transport vehicle,
the first lifter and the second lifter being connected by an inter-lifter route provided on each of the first travel floor and the second travel floor,
the article receiving section being adjacent to the inter-lifter route on each of the first travel floor and the second travel floor, and
the article supply section being disposed on at least either the first travel floor or the second travel floor.

According to this configuration, the article receiving section is provided on each of the first travel floor and the second travel floor. Thus, articles transported by the transport vehicle can be received on both the first travel floor and the second travel floor, which are on different levels. Accordingly, the number of sections for receiving articles transported by the transport vehicle can be increased, without enlarging the article transport facility in a planar manner.

Preferably the article receiving section is disposed on a greater number of travel floors than the article supply section.

According to this configuration, a large number of sections for receiving transported articles can be secured, relative to the number of article supply sections. Thus, an article transport facility suitable for applications requiring that articles be sorted to a large number of sections for receiving articles is readily constituted.

Preferably the article supply section is disposed on the travel floor on which the article receiving section is disposed.

According to the present configuration, the transport vehicle is able to transport articles supplied by the article supply section to the article receiving section disposed on the same level as the article supply section. Thus, the processes from supply to receipt of articles can be completed on one level. Accordingly, the transport distance of the articles is kept short.

Preferably the article transport facility further includes:
a sorting area in which the article received in the article receiving section is sorted,
the article from the article supply section is supplied to the transport vehicle either directly or housed in a container,
the transport vehicle transports the article or the container housing the article received in the article supply section to the sorting area,
the sorting includes unloading the article from the container transported by the transport vehicle, and
the article transport facility further includes an empty container collector disposed on the travel floor on which the article receiving section is disposed and configured to collect the container that is empty as a result of the unloading.

According to this configuration, the container used in the article supply section becomes an empty container as a result of the articles being sorted (unloaded) in the sorting area. The empty container collector collects this empty container. For example, by providing the empty container collected by the empty container collector to the article supply section, the container can be reused in the article supply section.

Preferably the inter-lifter routes extend in a route length direction orthogonal to a route width direction as viewed in an up-down direction,
the first level and the second level are adjacent to each other in the up-down direction,
the sorting area is provided on each of the first level and the second level, and
the inter-lifter route of the first travel floor is spaced a different distance away from the sorting area of the first level in the route width direction than is the inter-lifter route of the second travel floor from the sorting area of the second level.

According to the present configuration, the sorting area provided on the first level and the sorting area provided on the second level can be disposed to not overlap with each other as viewed in the up-down direction. The first and second levels are thereby readily disposed close together, and the facility can be reduced in size as a whole in the up-down direction.

Preferably the article transport facility further includes:
a plurality of transport units arranged in the route width direction and each constituted by the first lifter, the second lifter, the inter-lifter route of the first travel floor, and the inter-lifter route of the second travel floor,
the inter-lifter routes extend in a route length direction orthogonal to a route width direction as viewed in an up-down direction, and
on at least either the first travel floor or the second travel floor is provided a connecting route connecting the inter-lifter routes of the plurality of the transport units in the route width direction.

According to the present configuration, the transport vehicle can travel back and forth between the plurality of transport units via the connecting route. Accordingly, even if there is variation in the transport load between the plurality of transport units, each transport unit is able to move the transport vehicle to transport the articles as appropriate, according to the transport load. Thus, the transport efficiency of articles is readily enhanced in the facility as a whole.

Preferably the article transport facility further includes a controller configured to perform overall control of transportation of the article in the article transport facility, and to execute an operating unit limiting mode in which the transport unit to be operated is limited to one or more of the plurality of transport units.

According to this configuration, it is possible to flexibly respond to variation in the transport load of the article transport facility. For example, in off-peak periods or the like when the transport load is low due to a reduced number of articles to be transported, the number of transport units operating in the article transport facility can be suppressed by executing the operating unit limiting mode. Energy consumption in the article transport facility can thereby be suppressed to a low level.

### Industrial Applicability

The technology according to the present disclosure can be utilized in article transport facilities including a transport vehicle that transports articles and a plurality of travel floors each having a travel surface on which the transport vehicle travels.

### Description of Reference Signs

- 100: Article transport facility
- F: Travel floor
- F1: First floor
- F2: Second floor
- Ff: Travel surface
- L1: First lifter
- L2: Second lifter
- Rb: Inter-lifter route
- Rc: Connecting route
- 1: Transport vehicle
- 2: Article supply section
- 3: Article receiving section
- 4: Empty container collector
- G: Article
- C: Container
- M: Controller
- SA: Sorting Area
- U: Transport unit
- D1: First distance
- D2: Second distance
- X: Route length direction
- Y: Route width direction

## Claims

1. An article transport facility comprising:
a transport vehicle configured to transport an article;
a plurality of travel floors each having a travel surface on which the transport vehicle travels;
a first lifter and a second lifter horizontally spaced away from each other and configured to raise and lower the transport vehicle between a first travel floor, which is the travel floor on a first level, and a second travel floor, which is the travel floor on a second level;
an article supply section configured to supply the article to the transport vehicle; and
an article receiving section configured to receive the article transported by the transport vehicle,
the first lifter and the second lifter being connected by an inter-lifter route provided on each of the first travel floor and the second travel floor,
the article receiving section being adjacent to the inter-lifter route on each of the first travel floor and the second travel floor, and
the article supply section being disposed on at least either the first travel floor or the second travel floor.

2. The article transport facility according to claim 1, wherein the article receiving section is disposed on a greater number of travel floors than the article supply section.

3. The article transport facility according to claim 1, wherein the article supply section is disposed on the travel floor on which the article receiving section is disposed.

4. The article transport facility according to claim 1, further comprising:
a sorting area in which the article received in the article receiving section is sorted,
wherein the article from the article supply section is supplied to the transport vehicle either directly or housed in a container,
the transport vehicle transports the article or the container housing the article received in the article supply section to the sorting area,
the sorting includes unloading the article from the container transported by the transport vehicle, and
the article transport facility further comprises an empty container collector disposed on the travel floor on which the article receiving section is disposed and configured to collect the container that is empty as a result of the unloading.

5. The article transport facility according to claim 4,
wherein the inter-lifter routes extend in a route length direction orthogonal to a route width direction as viewed in an up-down direction,
the first level and the second level are adjacent to each other in the up-down direction,
the sorting area is provided on each of the first level and the second level, and
the inter-lifter route of the first travel floor is spaced a different distance away from the sorting area of the first level in the route width direction than is the inter-lifter route of the second travel floor from the sorting area of the second level.

6. The article transport facility according to any one of claims 1 to 5, further comprising:
a plurality of transport units arranged in the route width direction and each constituted by the first lifter, the second lifter, the inter-lifter route of the first travel floor, and the inter-lifter route of the second travel floor,
wherein the inter-lifter routes extend in a route length direction orthogonal to a route width direction as viewed in an up-down direction, and
on at least either the first travel floor or the second travel floor is provided a connecting route connecting the inter-lifter routes of the plurality of the transport units in the route width direction.

7. The article transport facility according to claim 6, further comprising: a controller configured to perform overall control of transportation of the article in the article transport facility, and to execute an operating unit limiting mode in which the transport unit to be operated is limited to one or more of the plurality of transport units.
